# EUROPEAN PATENT SPECIFICATION

(11) **EP 1 268 325 B1**
(45) Date of publication and mention of the grant of the patent: **23.06.2004**
(21) Application number: 01911789.4
(22) Date of filing: 21.02.2001
(51) Int. Cl.: B65G 19/22, B65G 19/28, B01D 21/18

(54) **SCRAPER BAR APPARATUS**
ABSTREIFAPPARAT
APPAREIL A BARRE DE RACLAGE

(30) Priority: 22.03.2000 FI 20000667
(43) Date of publication of application: 02.01.2003
(73) Proprietor: Finnketju Invest OY, 26510 Rauma (FI)
(72) Inventor: TUOMIKOSKI, Pekka, FIN-26410 Kaaro (FI)
(74) Representative: Kangasmäki, Reijo Holger
(86) International application number: PCT/FI2001/000170
(87) International publication number: WO 2001/070603

(56) References cited:
- WO-A1-86/04565
- WO-A1-98/09892

## Description

The invention relates to a scraper bar apparatus that is intended for scraping of material, which exists in a fluid basin, to an exhaust arrangement, such as one or more surface chutes, bottom chutes or like that exists in connection with the fluid basin, by means of a scraper bar arrangement, which moves in the liquid basin.

A traditional solution for the above purpose being used particularly in rectangular basins is such that the scraper bar arrangement comprises generally several scraper bars, being placed one after another in the longitudinal direction of the basin, and transferring means for moving of the above, such as two power transmission chains, being placed side by side and being driven e.g. by means of a drive wheel and turning wheel arrangement or like, in connection with which the scraper bars are attached removably particularly in order to make the service and maintenance of the scraper bar arrangement easier. The type of scraper bar arrangements above are being used nowadays e.g. in connection with a clarification basin so that the scraper bars are being transferred by chains that move e.g. at the opposite and essentially vertical side or partition walls of the basin in turns at the bottom and the surface in a way that when the scraper bars keep moving in connection with the bottom they scrape material, existing on the bottom, to a sludge pocket and correspondingly when the same keep moving on the surface they lead material, existing on the surface, e.g. to a collecting chute that goes cross the basin.

Such a scraper bar arrangement is disclosed in document WO-A-9809892 upon which the preamble of claim 1 is based.

In this type of solutions, the scraper bars are carried out generally by profiles that are often made of e.g. fibre glass and that are attached to the chains by screw joints. A disadvantage of totally integral scraper bars is particularly troublesome installation of the same to the chains that move at the walls, whereby very accurate and careful installation measures are required, so that the holes to be made to the scraper bars are just in the right positions. This causes often several problems in practice e.g. because of unevenness of the bottom and the side walls of the clarification basin and because of other similar reasons, which is why the holes must often be left to be done on-site during installation. So, such a problem is always related to traditional solutions that the basins must be manufactured with very accurate dimensions, in spite of which the installation measures are disproportionately time consuming in practice. The type of scraper bar structures are also very expensive to make, which is why the service and maintenance of theirs must be of good quality, so that the need for part replacements may be minimized. In addition to the above, a problem of traditional technique particularly related to the surface chutes is such that the surface scrapers carry material, existing on the surface of the liquid basin so to say indirectly to the collecting chute, in which connection it is very usual that e.g. foam etc. indefinite substance gets formed in front of the collecting chute, because the surface scraper does not go so to say from above the chute.

Naturally, the type of chain drive arrangements described above are not suitable as such e.g. in connection with circular basins, in which context usually surface and/or bottom scrapers that are connected e.g. to a bridge, which is connected e.g. with a bearing to the center of the basin, or corresponding arrangements are being used. This type of solutions require always rather massive structures, which is why the manufacturing costs as well as the operational service and maintenance costs of the same are significantly much higher than of the type of chain driven arrangements described above.

It is the aim of the scraper bar apparatus according to this invention to achieve a decisive improvement in the problems presented above and thus to raise essentially the level of knowledge in the field. In order to achieve this aim, the scraper bar apparatus according to the invention is primarily characterized in that it includes an endless power transmission assembly, such as one or more chains, wire ropes, ropes and/or like, that surrounds the area to be treated of the fluid basin and that is arranged during an operational situation to rotate along the pheriphery of the area to be treated by means of controlling and operating means and, whereto there has been attached a scraper bar arrangement by its opposite ends, which, while rotating in the fluid basin, such as a clarification basin, flotation basin and/or like in one or more essentially horizontal planes, performs scraping in the fluid basin all over the desired area to be treated.

As the most important advantages of the scraper bar apparatus according to the invention may be mentioned first of all versatility of the same or in other words its usability in connection with angulated as well as curvilinear basins, and on the other hand simplicity and reliability of its manufacturing and use, thanks to which both installation costs and service maintenance costs of the fluid basin may be significantly decreased. The operational profitability of the scraper bar apparatus according to the invention is first of all based on the fact, that removal of e.g. bottom or surface sludge takes place very accurately and directly to each exhaust chute in question, whereby e.g. the present "choke chutes" being used for removal of surface sludge are instead turnable, which is why they always take along also a lot of clean water. On the other hand, thanks to the invention, the building or installation tolerances do not have similar meaning than in prior technique, because the area of the liquid basin to be treated each time may be easily "framed" by the power transmission assembly regardless of the shape of the area to be treated, whereby with the power transmission assembly there has been coupled preferably e.g. one single scraper bar or more alike, the length of which is alterable or that is flexible and which, while being connected by its opposite ends e.g. to a driving chain, is able to rotate continuously in the fluid basin despite the alteration of the length determined by its opposite fastening ends by simultaneously eliminating all possible manufacturing/installation inaccuracy of the fluid basin and/or the power transmission assembly.

One advantage of the scraper bar apparatus according to the invention is furthermore that e.g. a sludge pocket or surface chute may be placed each time optimally in the process, whereby it is not needed to place them on terms of traditional technique. Furthermore the need for space of the scraper bar apparatus according to the invention is significantly smaller than of present solutions, thanks to which a fluid basin provided with equipment according to the invention is also very easy to cover in practice. Particularly removal of the bottom sludge is possible to carry out more advantageously in respect with present solutions also in such respect that so called lamellas, being used in liquid basins and that collect solid material from above the bottom of the fluid basin and wherefrom solid material, being gathered therewith, drops down to the bottom, may be placed as near as possible to the bottom. Thanks to the invention these lamellas may be placed in principle at a freely choosen point of the fluid basin or on the other hand profitably all over the basin. The scraper bar apparatus according to the invention may thus be constructed significantly "lighter" than the present ones, which first of all decreases decisively manufacturing costs, but which on the other hand also decreases significantly the need for operating power. In addition to the above, the invention enables significantly quicker installation when compared to traditional solutions, which is partly thanks to the fact, also that significantly less extra equipment is needed (e.g. partition walls being used in present basins are not needed etc.).

In the following description, the invention is illustrated in detail with reference to the appended drawings, whereby
- in Figures 1 and 2: there has been presented two alternative ways to carry out the scraper bar apparatus according to the invention on differing principles particularly in a rectangular basin as seen from above,
- in Figures 3a - 3c: there has been shown some advantageous details of the scraper bar apparatus according to the invention,
- in Figures 4a and 4b: there has been shown alternative embodiments of the scraper bar apparatus according to the invention particularly in a circular fluid basin as seen from above,
- in Figures 5a and 5b: there has been shown corresponding implementations as in Figures 4a and 4b particularly in a rectangular basin,
- in Figures 6a-6d: there has been shown as an advantageous embodiment details of a scraper bar apparatus based on a so called rotation center regarding structures at the bottom of the fluid basin (Fig. 6a and Fig. 6b) and corresponding applications at the surface of the fluid basin (Fig. 6c and Fig. 6d),
- in Figures 7a-7d: there has been shown alternative scraper bar structures that may be adapted in the scraper bar apparatus according to the invention and
- Figure 8: shows an advantageous power transmission assembly, being used in the scraper bar apparatus according to the invention.

The invention relates to a scraper bar apparatus that is intended for scraping of material, which exists in a fluid basin N, to an exhaust arrangement 2, such as one or more surface chutes 2a, bottom chutes 2b or like that exists in connection with the fluid basin, by means of a scraper bar arrangement 1, which moves in the liquid basin. The scraper bar apparatus includes an endless power transmission assembly 3, such as one or more chains 3', wire ropes, ropes and/or like, that surrounds the area N' to be treated of the fluid basin N and that is arranged during an operational situation to rotate w along the periphery N's of the area to be treated by means of controlling 3" and operating means and, whereto there has been attached a scraper bar arrangement 1; 1' by its opposite ends x1, x2, which, while rotating w in the fluid basin, such as a clarification basin, flotation basin and/or like in one or more essentially horizontal planes p, b, performs scraping in the fluid basin all over the desired area to be treated N'.

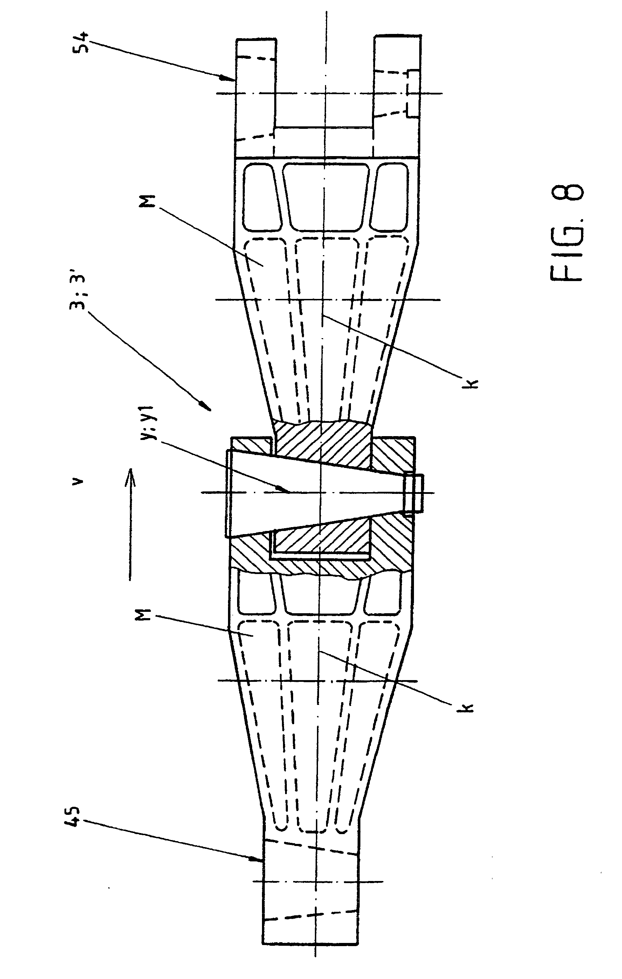

As a particularly advantageous embodiment, a chain 3' made of plastics is being used in the power transmission assembly 3, the type of which is shown e.g. in Fig. 8 and more accurately furthermore e.g. in FI Patent No. 101098, which moves at the edges of the area to be treated and, the supporting surface of which comprises notches, which are arranged preferably essentially crosswise in respect to the moving direction v of the chain and that are during conveying of the chain in cooperation with the counterpart surfaces, such as pins or like belonging to the chain wheel 3", that are arranged according to the notches and essentially crosswise in respect to the moving direction v. In this case in order to form jointing points, each shaped piece M has two link points 45, 54, whereby the first link point is arranged as a uniform projection 45 that is essentially narrower than the width of the shaped piece and the other one as a fork 54, whereby within both link points 45 and 54 there exists holes. In this case each jointing point may be formed by placing the said projection 45 of a previous shaped piece between the fork of a following shaped piece and by placing a joint pin or like in the hole.

In this connection, the cross section of the chain's joint pins y; y1 is advantageously arranged to change in the longitudinal direction conically towards the other end of the same, in order to expand the contact area at the jointing point that is due to the mutual angular alteration of the center lines k of the succesive shaped pieces M. When using this type of chain, the distance between the chain wheels 3", existing on the pheriphery N's of the area to be treated, may be optimized, because the type of chain above bends significantly less than chains, being equipped with e.g. traditional straight pins.

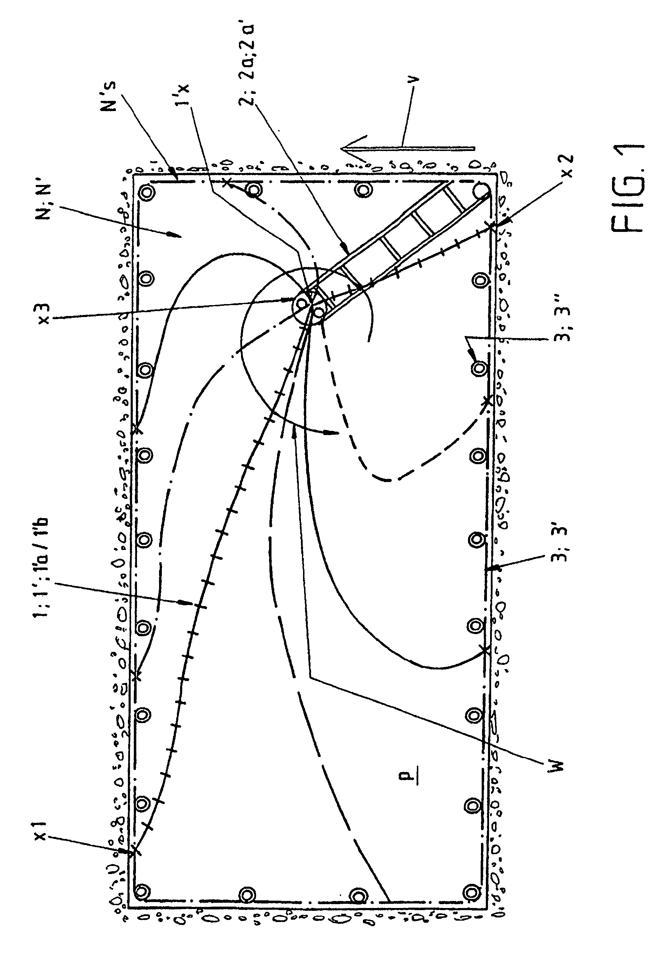

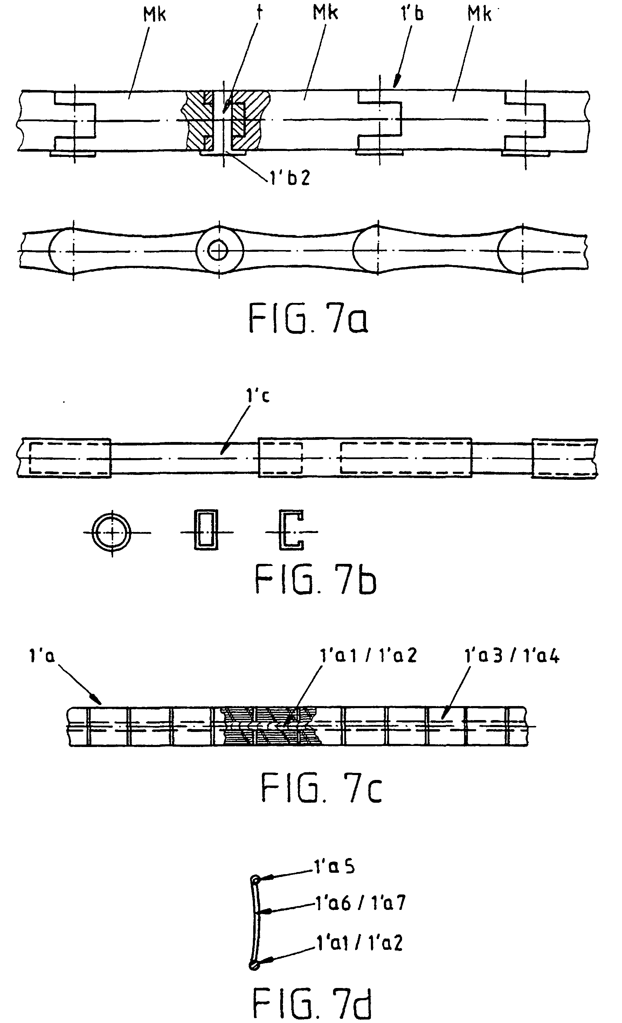

With reference to the embodiment shown particularly in Figure 1, alteration of the length determined by the opposite ends x1, x2 of one or more scraper bar arrangement's scraper bars 1'; 1'a, while the same keep rotating w in the fluid basin, is enabled by using a flexible structure that is made of such as continuous wire rope 1'a1, rope 1'a2, hose 1'a3, pipe 1'a4, fabric 1'a6, plastic 1'a7, rod material 1'a5 or e.g. by combinations formed of the above as shown in Figure 7c and Figure 7d. E.g. in Figure 7d the reference number 1'a5 means e.g. a so called floating lace, 1'a6/1'a7 a film of plastics or fabric and 1'a1/1'a2 e.g. a wire rope or rope. The above may be carried out on the other hand by using a scraper bar 1'b being shown e.g. in Fig. 7a as a side view and as a view seen from the above, which consists of shaped pieces MK, that are coupled with each other turnably by joints or in a corresponding manner.

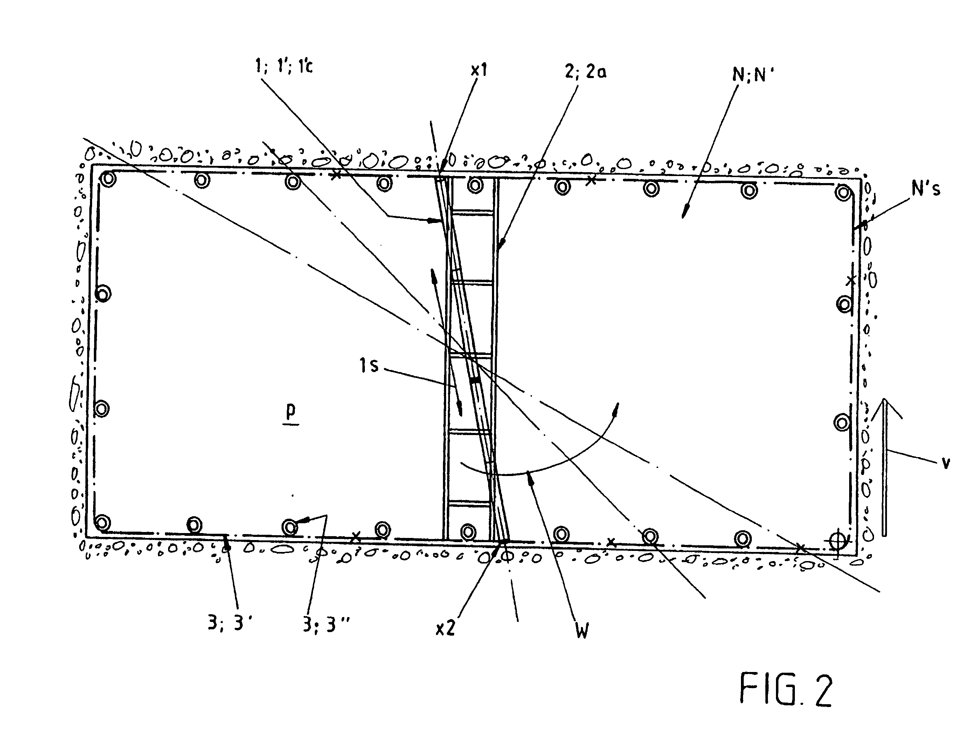

Particularly in Fig. 2 there has been shown on the other hand a scraper bar arrangement 1', which is based, deviating from the above, on the fact that alteration of the length determined by the opposite ends x1, x2 of one or more scraper bar arrangement's scraper bars 1'; 1'c, while the same keep rotating w in the fluid basin, is enabled e.g. as shown in Fig. 7b by using a bar structure with a telescope construction, which shrinks and expands in its longitudinal direction 1s. From the other view shown in this figure it can be seen that the cross section of the scraper bar may in this case be either open or closed, rectangular or curvilinear etc.

Furthermore as an advantageous embodiment of the invention with reference to Figures 1, 4a and 4b as well as 5a and 5b, in the fluid basin N there has been arranged a stationary rotation center x3, x4, in respect with which a scraper bar 1',belonging to the scraper bar arrangement and devided into two parts by one or more rotation joints 1'x, bearings and/or like, is arranged to rotate w. The solution shown in Figure 2 is based, deviating from the above, advantageously on a scraper bar with telescope structure 1'c, which is coupled only by its opposite ends x1, x2 with e.g. the chain 3'.

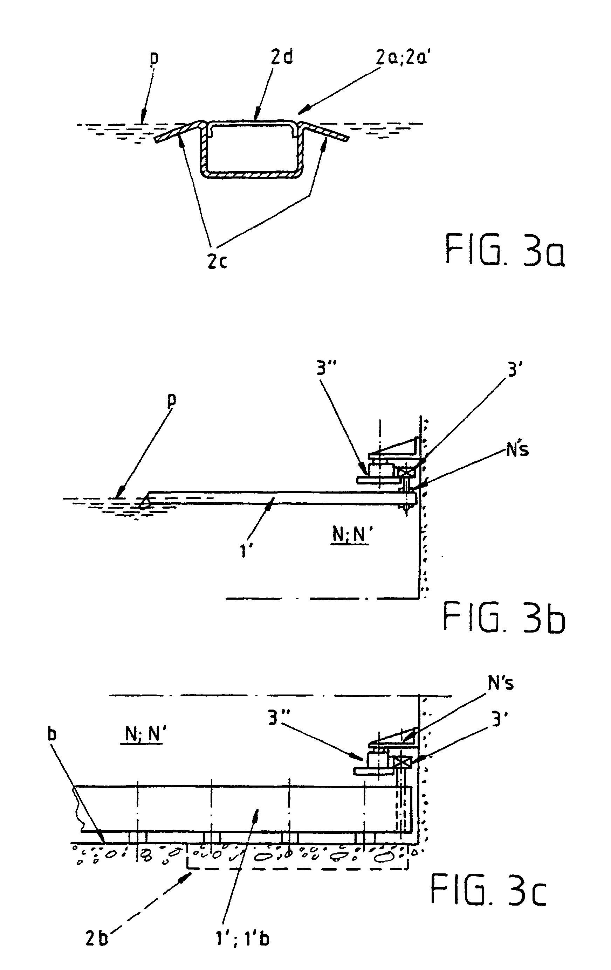

Particularly the scraber bar apparatuses, being shown in the figures listed above, are shown to scrape particularly material that exists on the surface p of the fluid basin to an exhaust chute assembly 2a that exists essentially on the surface of the fluid basin, which principle has been shown as an example in more detail in Figure 3b. In this connection each or every surface scraper bar 1' belonging to the scraper bar arrangement is manufactured from essentially floating material, whereby, except the embodiment shown in Figure 2, the rotation center x3, x4 controlling rotation of the scraper bar is supported stationarily at the end of a surface chute assembly 2a' that reaches from the edge of the liquid basin inside its area to be treated N'. Furthermore with reference to Figure 3a, at the opposite sides of the surface chute assembly 2a' there has been arranged e.g. guide ramps 2c and guide rails 2d on top of the same for guiding passage of the surface scraper bar 1' going from above the same.

In Figure 3c there is shown an advantageous principle for scraping of material that exists particularly at the bottom b of the fluid basin to an exhaust chute assembly 2b that exists at the bottom of the fluid basin. In the bottom scraper bar 1'; 1'b, being carried out e.g. as shown in Figure 7a, there has been arranged a glide and wear surface assembly 1'b2, which is formed e.g. of the head of the joint pin t that connects the scraper bar parts MK to one another jointedly or in a corresponding manner.

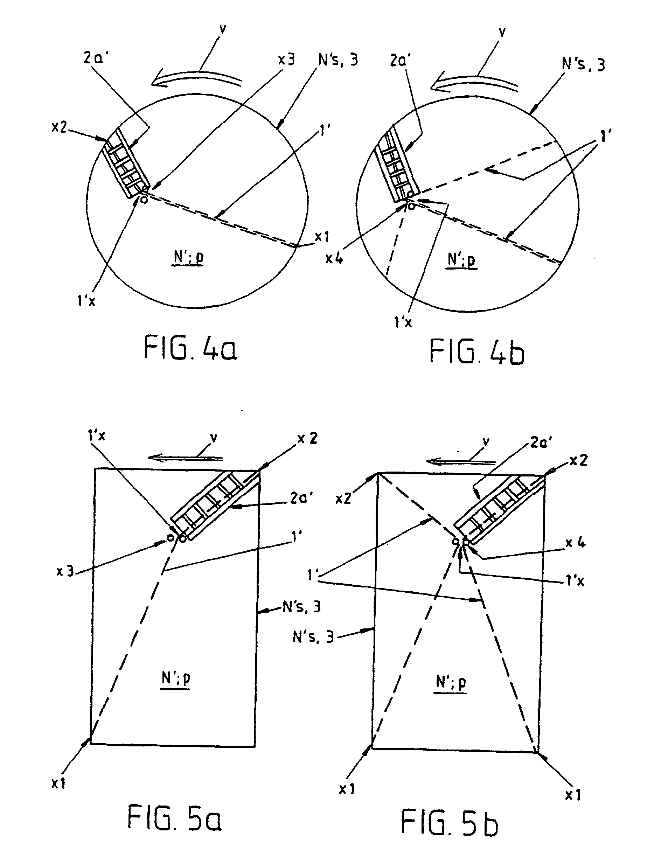

In the embodiments particularly concerning the rectangular basins shown in Figures 1, 2 and 5a and the circular basin shown in Figure 4a, the scraper bar arrangement includes a scraper bar 1', that is fastened by its opposite ends x1, x2 to a power transmission assembly 3 that passes essentially at the opposite sides of the fluid basin N.

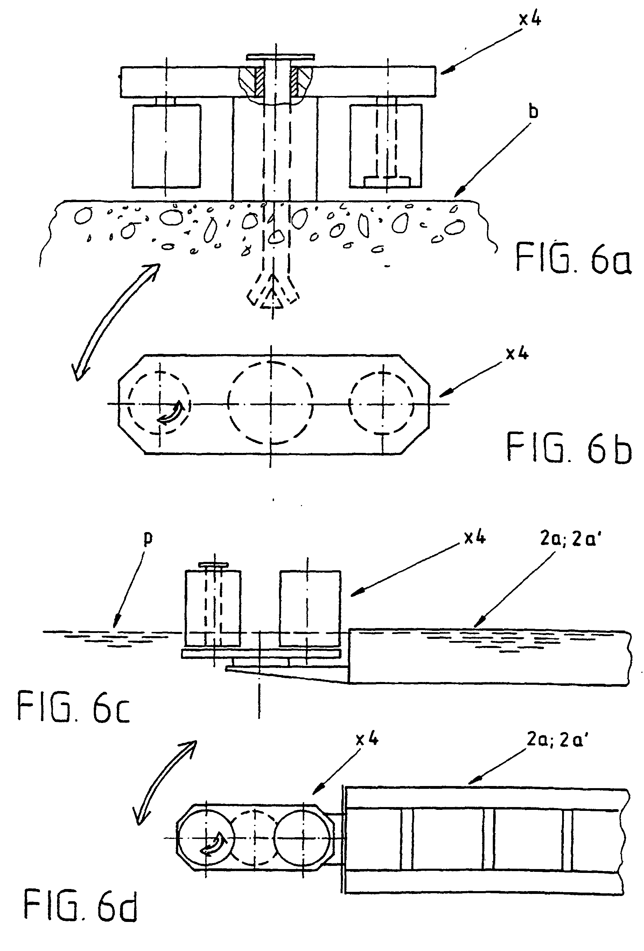

Correspondingly in the embodiments particularl concerning the rectangular basin shown in Figure 5a and the circular basin shown in Figure 4b, the scraper bar arrangement includes at least two scraper bars 1' that are fastened by their opposite ends x1, x2 to the power transmission assembly 3 and that are arranged to move simultaneously in the area to be treated N' of the fluid basin by means of rotation joints 1'x, bearings and/or the like that exist in the scraper bars and by a freely rotative double rotation center x4 or like, that is being fastened stationarily to the fluid basin, such as to the bottom b as shown in Figures 6a and 6b as side views and as views seen from above and/or in connection with its surface p as shown in Figures 6c and 6d as side views seen from above.

It is obvious, that the invention is not limited to the embodiments presented or described above, but it can be modified within the basic idea even to a great extent. In this connection it is thus first of all possible to use in the power transmission assembly e.g. a rope or wire rope etc., being attached to the scraper bars. Naturally there is a great amount of different kinds of usable scraper bar structures when keeping in mind scraping of both the surface and the bottom, in addition to which in connection with the same it is possible to use filling substances e.g. based on uretane or like etc. In addition to the above, it is naturally possible to provide the fluid basin with more scraper bars than shown above. Furthermore the area to be scraped in the fluid basin may naturally, deviating from what has been shown above, disclose only a certain part of the surface of the fluid basin or of its bottom, which matter is, however, exceptional as such, when keeping in mind traditional technique.

## Claims

1. Scraper bar apparatus that is intended for scraping of material, which exists in a fluid basin (N), to an exhaust arrangement (2), such as one or more surface chutes (2a), bottom chutes (2b) or like that exists in connection with the fluid basin, by means of a scraper bar arrangement (1), which moves in the liquid basin, **characterized in that** the scraper bar apparatus includes an endless power transmission assembly (3), such as one or more chains (3'), wire ropes, ropes and/or like, that surrounds the area (N') to be treated of the fluid basin (N) and that is arranged during an operational situation to rotate (w) along the periphery (N's) of the area to be treated by means of controlling (3") and operating means and, whereto there has been attached said scraper bar arrangement (1; 1') by its opposite ends (x1, x2), which while rotating (w) in the fluid basin, such as a clarification basin, flotation basin and/or like in one or more essentially horizontal planes (p, b), performs scraping in the fluid basin all over the desired area to be treated (N').

2. Scraper bar apparatus according to claim 1, **characterized in that** alteration of the length determined by the opposite ends (x1, x2) of one or more scraper bar arrangement's scraper bars (1'; 1'a), while the same keep rotating (w) in the fluid basin, is enabled by using a flexible structure that is made of such as continuous wire rope (1'a1), rope (1'a2), hose (1'a3), pipe (1'a4), fabric (1'a6), plastic (1'a7), rod material (1'a5) and/or like.

3. Scraper bar apparatus according to claim 1 or 2, **characterized in, that** alteration of the length determined by the opposite ends (x1, x2) of one or more scraper bar arrangement's scraper bars (1; 1'b), while the same keep rotating (w) in the fluid basin, is enabled by using shaped pieces (MK) that are connected to one another turnably, such as by joints or correspondingly.

4. Scraper bar apparatus according to any of the claims 1-3 above, **characterized in, that** alteration of the length determined by the opposite ends (x1, x2) of one or more scraper bar arrangement's scraper bars (1'; 1'c), while the same keep rotating (w) in the fluid basin is enabled by using a bar structure with a telescope construction.

5. Scraper bar apparatus according to any of the claims 1-4 above, **characterized in, that** in the fluid basin (N) there has been arranged a stationary rotation center (x3, x4), in respect with which a scraper bar (1'), which belongs to the scraper bar arrangement and that has been devided into two parts by one or more rotation joints (1'x), bearings and/or like, is arranged to rotate (w).

6. Scraper bar apparatus according to any of the claims 1-5 above particularly to scrape material that exists on the surface (p) of the fluid basin to an exhaust chute assembly (2a) that exists essentially on the surface of the fluid basin, **characterized in, that** one or more surface scraper bars (1') that belong to the scraper bar arrangement are manufactured from essentially floating material, whereby the rotation center (x3, x4) controlling rotation of the scraper bar is supported stationarily at the end of a surface chute assembly (2a') that reaches preferably from the edge of the fluid basin inside its area to be treated (N'), or in a corresponding manner.

7. Scraper bar apparatus according to claim 6, **characterized in, that** at the opposite sides of the surface chute assembly (2a') there has been arranged guide ramps (2c) or like and guide rails (2d) or like on top of the same for guiding passage of the surface scraper bar (1') going from above the same.

8. Scraper bar apparatus according to any of the claims 1-7 above particularly to scrape material that exists at the bottom (b) of the fluid basin to an exhaust chute assembly (2b) that exists at the bottom of the fluid basin, **characterized in, that** in the bottom scraper bar (1'; 1'b) that belongs to the scraper bar arrangement there has been arranged a glide and wear surface assembly (1'b2), which is formed preferably of the head of a joint pin (t) that connects the scraper bar parts (MK) to one another jointedly or in a corresponding manner.

9. Scraper bar apparatus according to any of the claims 1-8 above, **characterized in, that** the scraper bar arrangement includes a scraper bar (1') that is fastened by its opposite ends (x1, x2) to a power transmission assembly (3) that passes essentially at the opposite sides of the fluid basin (N).

10. Scraper bar apparatus according to any of the claims 1-9 above, **characterized in, that** the scraper bar arrangement includes at least two scraper bars (1') that are fastened by their opposite ends (x1, x2) to the power transmission assembly (3) and that are arranged to move simultaneously in the area to be treated (N') of the fluid basin by means of rotation joints (1'x), bearings and/or the like that exist in the scraper bars and by a freely rotative double rotation center (x4) or like that is being fastened stationarily to the fluid basin.

## Patentansprüche

1. Abstreifapparat zum Abstreifen eines in einem Flüssigkeitsbecken (N) befindlichen Materials in eine Abflussvorrichtung (2), wie beispielsweise eine oder mehrere Oberflächenrinnen (2a), Bodenrinnen (2b) oder ähnliche, die in Verbindung mit dem Flüssigkeitsbecken stehen, mit Hilfe einer Abstreifvorrichtung (1), die sich in dem Flüssigkeitsbecken bewegt, **dadurch gekennzeichnet, dass** der Abstreifapparat eine endlose Kraftübertragungsinstallation (3), wie beispielsweise eine oder mehrere Ketten (3'), Drahtseile, Seile und/oder ähnliche, enthält, die den zu behandelnden Bereich (N') des Flüssigkeitsbeckens (N) umgibt und so angeordnet ist, dass sie während einer Betriebssituation entlang der Peripherie (N's) des mit Hilfe von Steuerungsmitteln (3") und Betriebsmitteln zu behandelnden Bereichs rotiert (w), und an der die erwähnte Abstreifvorrichtung (1; 1') an ihren gegenüberliegenden Enden (x1, x2) befestigt wurde, die, indem sie in dem Flüssigkeitsbecken, wie beispielsweise einem Klärbecken, Flotationsbecken und/oder ähnlichem, auf einer oder mehreren im Wesentlichen horizontalen Ebenen (p, b) rotiert (w), den gewünschten zu behandelnden Bereich (N') im Flüssigkeitsbecken komplett abstreift.

2. Abstreifapparat gemäß Anspruch 1, **dadurch gekennzeichnet, dass** die Veränderung der Länge, die durch die gegenüberliegenden Enden (x1, x2) eines Abstreifers oder mehrerer Abstreifer (1'; 1'a) der Abstreifvorrichtung, während dieselben im Flüssigkeitsbecken rotieren (w), bestimmt wird, durch Verwendung einer flexiblen Struktur, wie beispielsweise eines ununterbrochenen Drahtseil- (1'a1), Seil- (1'a2), Schlauch- (1'a3), Rohr- (1'a4), Stoff- (1'a6), Kunststoff- (1'a7), Stangenmaterials (1'a5) und/oder ähnlichem, ermöglicht wird.

3. Abstreifapparat gemäß Anspruch 1 oder 2, **dadurch gekennzeichnet, dass** die Veränderung der Länge, die durch die gegenüberliegenden Enden (x1, x2) eines Abstreifers oder mehrerer Abstreifer (1'; 1'b) der Abstreifvorrichtung, während diese im Flüssigkeitsbecken rotieren (w), bestimmt wird, durch Verwendung von geformten, drehbar miteinander verbundenen Teilen (MK), wie beispielsweise Gelenken oder ähnlichen, ermöglicht wird.

4. Abstreifapparat gemäß einem der vorhergehenden Ansprüche 1 bis 3, **dadurch gekennzeichnet, dass** die Veränderung der Länge, die durch die gegenüberliegenden Enden (x1, x2) eines Abstreifers oder mehrerer Abstreifer (1'; 1'b) der Abstreifvorrichtung, während diese im Flüssigkeitsbecken rotieren (w), bestimmt wird, durch Verwendung einer Abstreiferstruktur mit einer Teleskopkonstruktion ermöglicht wird.

5. Abstreifapparat gemäß einem der vorhergehenden Ansprüche 1 bis 4, **dadurch gekennzeichnet, dass** in dem Flüssigkeitsbecken (N) ein stationäres Rotationszentrum (x3, x4) angeordnet wurde, in dessen Zusammenhang ein Abstreifer (1'), der zu der Abstreifvorrichtung gehört und durch ein oder mehrere Rotationsgelenke (1'x), Lager und/oder ähnliche in zwei Teile geteilt wurde, angeordnet ist um zu rotieren (w).

6. Abstreifapparat gemäß einem der vorhergehenden Ansprüche 1 bis 5, insbesondere zum Abstreifen von Material, das sich an der Oberfläche (p) des Flüssigkeitsbeckens befindet, zu einer im Wesentlichen an der Oberfläche des Flüssigkeitsbeckens befindlichen Abflussrinneninstallation (2a), **dadurch gekennzeichnet, dass** ein oder mehrere zur Abstreifvorrichtung gehörende Oberflächenabstreifer (1') aus im Wesentlichen schwimmendem Material hergestellt wurden, wobei das die Rotation des Abstreifers steuernde Rotationszentrum (x3, x4) stationär am Ende einer Oberflächenrinneninstallation (2a'), die vorzugsweise vom Rand des Flüssigkeitsbeckens in ihren zu behandelnden Bereich (N') reicht, oder auf entsprechende Art gestützt wird.

7. Abstreifapparat gemäß Anspruch 6, **dadurch gekennzeichnet, dass** an den gegenüberliegenden Rändern der Oberflächenrinneninstallation (2a') Führungsrampen (2c) oder ähnliches und am oberen Rand derselben Führungsschienen (2d) oder ähnliches angeordnet wurden, um den Lauf des sich darüber bewegenden Abstreifers (1') zu steuern.

8. Abstreifapparat gemäß einem der vorhergehenden Ansprüche 1 bis 7, insbesondere zum Abstreifen von Material, das sich am Boden (b) des Flüssigkeitsbeckens befindet, zu einer am Boden des Flüssigkeitsbeckens befindlichen Abflussrinneninstallation (2b), **dadurch gekennzeichnet, dass** in dem zur Abstreifvorrichtung gehörenden Bodenabstreifer (1'; 1'b) eine Gleit- und Abnutzungsoberflächeninstallation (1'b2) angeordnet wurde, die vorzugsweise durch den Kopf eines Gelenkbolzens (t), der die Teile des Abstreifers (MK) gelenkartig miteinander verbindet, oder auf entsprechende Art gebildet wird.

9. Abstreifapparat gemäß einem der vorhergehenden Ansprüche 1 bis 8, **dadurch gekennzeichnet, dass** die Abstreifvorrichtung einen Abstreifer (1') enthält, der an seinen gegenüberliegenden Enden (x1, x2) an einer Kraftübertragungsinstallation (3), die im Wesentlichen an den gegenüberliegenden Seiten des Flüssigkeitsbeckens (N) verläuft, befestigt ist.

10. Abstreifapparat gemäß einem der vorhergehenden Ansprüche 1 bis 9, **dadurch gekennzeichnet, dass** die Abstreifvorrichtung zumindest zwei Abstreifer (1') enthält, die an ihren gegenüberliegenden Enden (x1, x2) an der Kraftübertragungsinstallation (3) befestigt sind und so angeordnet sind, dass sie sich simultan in dem zu behandelnden Bereich (N') des Flüssigkeitsbeckens mit Hilfe von in den Abstreifern befindlichen Rotationsgelenken (1'x), Lagern und/oder ähnlichen und von einem stationär am Flüssigkeitsbecken befestigten frei rotierenden doppelten Rotationszentrum (x4) oder ähnlichem bewegen.

## Revendications

1. Appareil à barre de raclage destiné à racler une matière existante dans un bassin de liquide (N), vers une dispositif pour la sortie (2) comme une ou plusieurs goulottes de surface (2a) ou goulottes inférieures (2b) ou équivalent en liaison avec le bassin de liquide, à l'aide d'un dispositif à barre de raclage (1) qui se déplace dans le bassin de liquide, **caractérisé en ce que** l'appareil à barre de raclage comprend une construction de transmission sans fin (3) comme un(e) ou plusieurs chaînes (3'), câbles en acier, cordes ou équivalent, entourant la surface (N') du bassin de liquide (N) à être traiter et qui est conçue de manière à tourner (w), en situation de fonctionnement, le long de la périphérie (N's) de la surface à être traiter par des moyens de commande (3'') et de fonctionnement et où a été fixé ledit dispositif à barre de raclage (1 ; 1') par ses extrémités opposées (x1, x2) qui, lorsqu'il est en rotation (w) dans le bassin de liquide, comme un bassin de clarification, un bassin de flottation ou équivalent dans un ou plusieurs plans principalement horizontaux (p, b), effectue le raclage dans le bassin de liquide sur toute la surface à être traiter souhaitée (N').

2. Appareil à barre de raclage selon la revendication 1, **caractérisé en ce que** la modification de la longueur déterminée par les extrémités opposées (x1, x2) d'une ou plusieurs barres (1' ; 1'a) du dispositif à barre de raclage, pendant que ces barres continuent à tourner (w) dans le bassin de liquide, est rendue possible par l'utilisation d'une structure souple constituée de câble en acier continu (1'a1), de corde (1'a2), de flexible (1'a3), de tuyau (1'a4), de tissu (1'a6) de plastique (1'a7), de barre (1'a5) ou équivalent.

3. Appareil à barre de raclage selon la revendication 1 ou 2, **caractérisé en ce que** la modification de la longueur déterminée par les extrémités opposées (x1, x2) d'une ou plusieurs barres (1 ; 1'b) du dispositif à barre de raclage, pendant que ces barres continuent à tourner (w) dans le bassin de liquide, est rendue possible par l'utilisation de pièces profilées (MK) reliées de manière à pouvoir pivoter les unes par rapport aux autres, par des charnières ou équivalent.

4. Appareil à barre de raclage selon l'une des revendications précédentes 1 à 3, **caractérisé en ce que** la modification de la longueur déterminée par les extrémités opposées (x1, x2) d'une ou plusieurs barres (1' ; 1'c) du dispositif de barre de raclage, pendant que ces barres continuent à tourner (w) dans le bassin de liquide, est rendue possible par l'utilisation d'une structure de barres à construction télescopique.

5. Appareil à barre de raclage selon l'une des précédentes revendications 1 à 4, **caractérisé en ce qu'**un centre de rotation fixe (x3, x4) est aménagé dans le bassin de liquide (N) et qu'une barre de raclage (1') qui appartient au dispositif à barre de raclage et qui a été divisée en deux parties par une ou plusieurs charnières de rotation (1'x) roulements ou équivalent tourne (w) autour de ce centre de rotation.

6. Appareil à barre de raclage selon l'une des revendications précédentes 1 à 5, destiné en particulier à racler une matière existante à la surface (p) du bassin de liquide vers une construction de goulotte de sortie (2a) existante principalement à la surface du bassin de liquide, **caractérisé en ce qu'**une ou plusieurs barres de raclage en surface (1') qui appartiennent au dispositif à barre de raclage sont fabriquées en matériau essentiellement flottant, le centre de rotation (x3, x4) commandant la rotation de la barre de raclage étant soutenu de manière fixe à l'extrémité d'une construction de goulotte de surface (2a') qui va de préférence du bord du bassin de liquide à sa surface à être traiter (N') ou d'une manière équivalente.

7. Appareil à barre de raclage selon la revendication 6, **caractérisé en ce que**, sur les faces opposées de la construction de goulotte de surface (2a'), on a monté des rampes de guidage (2c) ou équivalent et des rails de guidage (2d) ou équivalent à la partie supérieure pour guider la barre de raclage de surface (1') venant du dessus.

8. Appareil à barre de raclage selon l'une des revendications précédentes 1 à 7, destiné en particulier à racler une matière existante au fond (b) du bassin de liquide vers une construction de goulotte de sortie (2b) au fond du bassin de liquide, **caractérisé en ce que**, sur la barre de raclage de fond (1' ; 1'b) qui appartient au dispositif à barre de raclage, on a monté une construction de surfaces de glissement et d'usure (1'b2) composé de préférence de la tête d'un boulon d'articulation (t) qui relie entre elles les pièces de la barre de raclage (MK) de manière articulée ou équivalente.

9. Appareil à barre de raclage selon l'une des revendications précédentes 1 à 8, **caractérisé en ce que** le dispositif à barre de raclage comprend une barre de raclage (1') qui est fixée par ses extrémités opposées (x1, x2) à une construction de transmission (3) qui passe principalement sur les côtés opposés du bassin de liquide (N).

10. Appareil à barre de raclage selon l'une des revendications précédentes 1 à 9, **caractérisé en ce que** le dispositif à barre de raclage comprend au moins deux barres de raclage (1') qui sont fixées par leurs extrémités opposées (x1, x2) à la construction de transmission (3) et qui sont configurées de manière à se déplacer simultanément dans la surface à être traiter (N') du bassin de liquide à l'aide des charnières de rotation (1'x), des roulements ou équivalent montés dans les barres de raclage et l'aide d'un centre de rotation double à liberté de rotation (x4) ou équivalent fixé stationnairement sur le bassin de liquide.
